(19) **Europäisches Patentamt / European Patent Office / Office européen des brevets**

(11) **EP 2 031 348 B1**

(12) # EUROPÄISCHE PATENTSCHRIFT

(45) Veröffentlichungstag und Bekanntmachung des Hinweises auf die Patenterteilung:
**10.09.2014 Patentblatt 2014/37**

(51) Int Cl.:
**G01B 11/25** *(2006.01)* **G01B 11/30** *(2006.01)*
**B21B 38/02** *(2006.01)* **G01M 11/00** *(2006.01)*

(21) Anmeldenummer: **08012399.5**

(22) Anmeldetag: **09.07.2008**

(54) **Oberflächeninspektionsverfahren zum Detektieren von Oberflächendefekten und/oder Vermessen der Oberflächentopographie**

Surface inspection method for detecting surface defects and/or charting the surface topography

Procédé d'inspection de surfaces destinée à détecter des défauts de surface et/ou mesurer la topographie de surface

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.07.2007 DE 102007032113**

(43) Veröffentlichungstag der Anmeldung:
**04.03.2009 Patentblatt 2009/10**

(73) Patentinhaber: **VDEh-Betriebsforschungsinstitut GmbH**
**40237 Düsseldorf (DE)**

(72) Erfinder:
• **Krambeer, Hagen**
**41363 Jüchen (DE)**
• **Müller, Ulrich Dr.**
**40789 Monheim (DE)**
• **Coen, Günther Dr.**
**42549 Velbert (DE)**
• **Polzer, Jan Dr.**
**47058 Duisburg (DE)**

(74) Vertreter: **Tilmann, Max Wilhelm et al**
**König-Szynka-Tilmann-von Renesse**
**Patentanwälte Partnerschaft mbB**
**Postfach 11 09 46**
**40509 Düsseldorf (DE)**

(56) Entgegenhaltungen:
DE-A1- 19 643 018 US-A- 5 359 668
US-A1- 2006 072 122 US-B1- 6 751 344

• **RITTER R ET AL: "Slope and contour measurement by the reflection grating method and the photogrammetric principle" OPTICS AND LASERS IN ENGINEERING, ELSEVIER, Bd. 15, Nr. 2, 1. Januar 1991 (1991-01-01), Seiten 103-113, XP022580069 ISSN: 0143-8166 [gefunden am 1991-01-01]**
• **KAMMEL S ET AL: "Deflectometric Measurement of Specular Surfaces" INSTRUMENTATION AND MEASUREMENT TECHNOLOGY CONFERENCE, 2005. IMTC 2005 . PROCEEDINGS OF THE IEEE OTTAWA, ON, CANADA 16-19 MAY 2005, PISCATAWAY, NJ, USA,IEEE, Bd. 1, 16. Mai 2005 (2005-05-16), Seiten 531-536, XP010900455 ISBN: 978-0-7803-8879-6**
• **SAVARESE S ET AL: "Local analysis for 3D reconstruction of specular surfaces" PROCEEDINGS 2001 IEEE CONFERENCE ON COMPUTER VISION AND PATTERN RECOGNITION. CVPR 2001. KAUAI, HAWAII, DEC. 8 - 14, 2001; [PROCEEDINGS OF THE IEEE COMPUTER CONFERENCE ON COMPUTER VISION AND PATTERN RECOGNITION], LOS ALAMITOS, CA, IEEE COMP. SOC, US, Bd. 2, 8. Dezember 2001 (2001-12-08), Seiten 738-745, XP010584199 ISBN: 978-0-7695-1272-3**
• **H.W. LIPPINCOTT, H. STARK: "Optical-digital detection of dents and scratches on specular metal surfaces" APPLIED OPTICS, Bd. 21, Nr. 16, 15. August 1982 (1982-08-15), Seiten 2875-2881, XP002511423**

**Beschreibung**

Die Erfindung betrifft ein Oberflächeninspektionsverfahren zum Detektieren von Oberflächendefekten und/oder Vermessen der Oberflächentopographie von spiegelnden stetigen Oberflächen.

Die Planheit von Industrieprodukten, insbesondere von Bandstahl bzw. von Metallbändern, gehört heute zu einer der ausschlaggebenden Qualitätsmerkmale. Die Einhaltung enger Planheitstoleranzen ist nicht nur ein Maß für die Güte des verkaufsfertigen Produkts sondern auch Voraussetzung für den störungsfreien Ablauf der Verarbeitungsprozesse, insbesondere bei ständig steigender Automatisierung von Produktionsabläufen. Die Online-Erfassung der Planheit im Bandbearbeitungsprozess, beispielsweise im Walzprozess oder diesem nachfolgenden Bearbeitungsprozessen, sowie die Optimierung der Planheit durch Steuer- und Regelsysteme gehört daher zu den vordringlichsten Aufgaben zur Qualitätsverbesserung.

Im Bereich der Bearbeitung von Metallbändern sind zur messtechnischen Online-Erfassung der Planheit von Bändern verschiedene Verfahren bekannt und im industriellen Einsatz, wie beispielsweise berührungslos arbeitende optische Verfahren, die die Messung an quasi zugfreien Bändern ermöglichen, wenn es sich um Bänder mit nicht spiegelnder Oberfläche handelt oder beispielsweise spannungsbasierte Verfahren, bei denen mit so genannten Messrollen die Spannungsverteilung im Band unter Zug ermittelt wird.

Bei diesen Metallbändern werden zur Online-Messung der Oberfläche zunehmend optische Messstellen eingesetzt, welche nach dem Prinzip der Streifenprojektion arbeiten. Im Ergebnis liefern diese Messsysteme die Form der Oberfläche als Matrix $Z_{ij}$ ($X_i$, $Y_i$). Daraus kann unter anderem eine so genannte Längsverteilung berechnet werden, welche wiederum als Messgröße in der Regelung eines Walzgerüsts verwendet wird. Die Messbereiche sind in der Praxis beim Bandwalzen in der Regel 2 m x 2 m groß. Durch die flächenhafte Vermessung zu einem bestimmten Zeitpunkt (Belichtungszeit der Kamera) kommt es zu keinen durch die Eigenbewegung des Messguts bedingten Verfälschungen des Messergebnisses. Diese Messsysteme sind allerdings nur für die Messung solcher Oberflächen geeignet, welche Licht zumindest teilweise diffus immitieren. Die Systeme können nicht zur Messung hochspiegelnder Oberflächen, z. B. Edelstahl oder Aluminium eingesetzt werden.

Aus DE 196 43 018 A1 ist eine Vorrichtung für reflektierenden Stahl mit einer Inspektionseinheit zum Messen von Planitätsfehlern bekannt, die eine Kamera und ein Lichtraster, durch das Licht von einer Lichtquelle hindurch tritt, aufweist. Die Vorrichtung weist ferner ein bewegtes, reflektierendes Metallband auf. Die Kamera und das Lichtraster sind derart angeordnet, dass die Sichtrichtung der Kamera auf einen Bereich gerichtet ist, durch den eine Oberfläche des bewegten, reflektierenden Metallbands bewegt wird. Das Lichtraster ist derart angeordnet und diesem Bereich so zugeordnet, dass der Strahlengang der Sichtstrahlen der Kamera von der Kamera über die Oberfläche des reflektierenden Metallbands bis zur Oberfläche des Lichtrasters führt. Der Fokus der Kamera ist auf das Raster eingestellt.

Vor diesem Hintergrund liegt der Erfindung die Aufgabe zugrunde, ein Oberflächeninspektionsverfahren zum Detektieren von Oberflächendefekten und/oder Vermessen der Oberflächentopographie von stetigen Oberflächen vorzuschlagen, das auch bei hochspiegelnden Oberflächen eingesetzt werden kann. Vorzugsweise soll das Verfahren derart ausgebildet sein, dass es robust ausgebildet werden kann. Idealerweise benötigt es nur eine einzige Aufnahme je Messung. Ferner soll idealerweise der Kalibrieraufwand minimal sein.

Diese Aufgabe wird durch das Oberflächeninspektionsverfahren gemäß dem Anspruch 8 gelöst. Vorteilhafte Ausgestaltungen sind in den Unteransprüchen wiedergegeben.

Die Erfindung macht sich insbesondere die Eigenschaft spiegelnder Oberflächen zunutze, Lichtstrahlen gemäß dem Reflektionsgesetz zu reflektieren. Es wird eine Kamera vorgesehen, die derart ausgerichtet ist, dass sie das Spiegelbild eines ebenfalls vorgesehenen Schirms (einer Schirmplatte) mit einem strukturierten Muster in der zu vermessenden, spiegelnden Oberfläche sieht. Ist die spiegelnde Fläche eine Ebene, dann empfängt die Kamera das Muster der Schirmplatte unverzerrt. Abweichungen im spiegelnden Messobjekt, wie beispielsweise Buckel, Wellen, Querbögen oder Oberflächendefekte, deformieren das Spiegelbild der Schirmplatte. Nach dem erfindungsgemäßen Verfahren kann die Deformation des Musters der Schirmplatte in der von der Kamera aufgenommenen Aufnahme zur Berechnung des Verlaufs einer Modellfläche für die betrachtete, spiegelnde Oberfläche genutzt werden.

Eine Vorrichtung für ein spiegelndes Metallband mit einer Inspektionseinheit zum Detektieren von Oberflächendefekten und/oder Vermessen der

Oberflächentopographie weist eine Kamera und einen Schirm auf, auf dem ein Muster abgebildet ist. Die Sichtrichtung der Kamera ist auf einen Bereich gerichtet, durch den eine Oberfläche des bewegten, spiegelnden Metallbands bewegt wird. Die Oberfläche des Schirms, auf der das Muster abgebildet ist, ist diesem Bereich zugewandt, so dass der Strahlengang der Sichtstrahlen der Kamera von der Kamera über die Oberfläche des spiegelnden Metallbands bis zur Oberfläche des Schirms führt. Die Kamera ist dabei auf die Oberfläche des Schirms fokussiert. Aus Übersichtsgründen werden in dieser Beschreibung und in den Ansprüchen alle Vektoren bzw. Richtungsangaben entgegen der Ausbreitungsrichtung des Lichts in Sichtrichtung der Kamera beschrieben, also nach der Art der so genannten "inversen Strahlverfolgung".

Als spiegelnd wird eine Oberfläche bzw. ein Metallband bezeichnet, bei der bzw. dem das Reflexionsgesetz gilt. Diese glatten Oberflächen besitzen gegenüber der Wellenlänge des Lichts kleine Rauhigkeitsstrukturen. Bei rauen Oberflächen wird die Strahlung diffus zurückgestreut.

Als Kamera wird insbesondere eine CCD-Matrix-Kamera eingesetzt oder eine Kamera, welche empfindlich im Wellenlängenbereich des sichtbaren Lichts ist.

Die Vorrichtung kann mit nur einer einzigen Kamera ausgestattet sein, da das erfindungsgemäße Oberflächeninspektionsverfahren nicht die Betrachtung der spiegelnden Oberflächen aus mehreren Beobachtungsrichtungen benötigt. Ebenso kann die Vorrichtung mit einem einzigen Schirm ausgestaltet sein. Dieser kann in der Vorrichtung fest montiert sein und braucht für die Durchführung der Inspektion nicht bewegt zu werden.

In einer bevorzugten Ausführungsform ist das Muster fest auf dem Schirm aufgebracht, beispielsweise auf den Schirm aufgedruckt. Es kann eine Lichtquelle vorgesehen sein, die den Schirm anstrahlt.

In einer alternativen Ausführungsform kann das Muster durch einen Projektor, beispielsweise einen Projektor mit einem Diavorschub, auf den Schirm projiziert werden.

Vorzugsweise ist der Schirm opak. Alternativ kann der Schirm durch ein hinterleuchtetes LCD-Display oder einen Plasmaschirm gebildet werden.

In einer bevorzugten Ausführungsform ist das Muster, ausgehend vom Messbereich, ein homogenes Raster, beispielsweise ein Kreuzgitter. Die Ausbildung des Musters als Raster vereinfacht die Auswertung der Aufnahme der Kamera. Als Muster können jedoch auch andere, nicht rasterartige Muster verwendet werden, beispielsweise Schachbrettmuster, farbcodierte Muster, codierte Marken oder Dotcode.

Nach einer bevorzugten Ausführungsform weist das Muster ein homogenes Raster und mindestens eine von dem homogenen Raster abweichende Markierung auf. Bei dem erfindungsgemäßen Oberflächeninspektionsverfahren ist es von Vorteil, wenn einzelne Elemente des Rasters mit einem durchlaufenden Index identifiziert werden können. Das Vorsehen einer von dem homogenen Raster abweichenden Markierung erlaubt es besonders leicht, den Startpunkt dieser Indizierung festzulegen und auch in der Aufnahme der Kamera wiederzufinden, selbst wenn das Muster durch die spiegelnde Oberfläche abweichend gespiegelt wird.

In einer besonders bevorzugten Ausführungsform ist lediglich eine von dem homogenen Raster abweichende Markierung vorgesehen. Dies reicht aus, um bei einer bevorzugten Ausführungsform des erfindungsgemäßen Oberflächeninspektionsverfahrens die dort vorgeschlagene Indizierung durchzuführen.

In einer bevorzugten Ausführungsform weist das Muster ein Kreuzgitter auf, bei dem die Gitterzwischenräume nicht rechteckig sondern rund ausgebildet sind. Es hat sich gezeigt, dass ein derartiges Kreuzgitter besonders gut analysiert werden kann.

Bei dem erfindungsgemäßen Oberflächeninspektionsverfahrens zum Detektieren von Oberflächendefekten und/oder Vermessung der Oberflächentopographie von spiegelnden, stetigen Oberflächen, insbesondere spiegelnden Oberflächen von Metallbändern und ganz besonders von bewegten Metallbändern, macht eine Kamera zunächst eine Aufnahme eines auf einem Schirm abgebildeten Musters, das so ausgestaltet ist, dass es zumindest Schnittpunkte von Linien darstellt. Die Sichtrichtung der Kamera ist dabei auf einen Bereich der spiegelnden Oberfläche gerichtet. Die Oberfläche des Schirms, auf der das Muster abgebildet ist, ist diesem Bereich zugewandt, so dass der Strahlengang der Sichtstrahlen der Kamera von der Kamera über die spiegelnde Oberfläche bis zur Oberfläche des Schirms führt. Die Kamera ist auf die Oberfläche des Schirms fokussiert.

Die Aufnahme wird als Matrix A abgelegt, bei der der jeweilige Wert $a_{ij}$ dem Messwert entspricht, den die Kamera am Pixelort $i_{ij}$ aufgenommen hat, wobei der Maximalwert I des Index i der Anzahl der Pixelorte in eine erste Ausbreitungsrichtung der Aufnahmefläche der Kamera und der Maximalwert J des Index j der Anzahl der Pixelorte in eine zweite Ausbreitungsrichtung entspricht. Die abgelegte Matrix A wird durch eine Binarisierung in eine Matrix B überführt, bei der der jeweilige Wert $b_{ij}$ entweder den Wert 1 oder 0 hat. Das durch die Matrix B repräsentierte Binärbild wird einem Skelettierverfahren zugeführt, bei dem in einem Koordinatensystem, dessen beide Achsen den beiden Indexen der Matrix entsprechen, Linienverläufe ermittelt werden, entlang derer die Werte $b_{ij}$ gleich sind und danach eine Schnittpunkttabelle erzeugt wird, die die räumliche Lage von Schnittpunkten der Linienverläufe in dem Koordinatensystem wiedergibt. Mit Hilfe eines iterativen Verfahrens wird dann aus der Schnittpunkt-Tabelle der Verlauf einer Modellfläche für die betrachtete spiegelnde Oberfläche ermittelt.

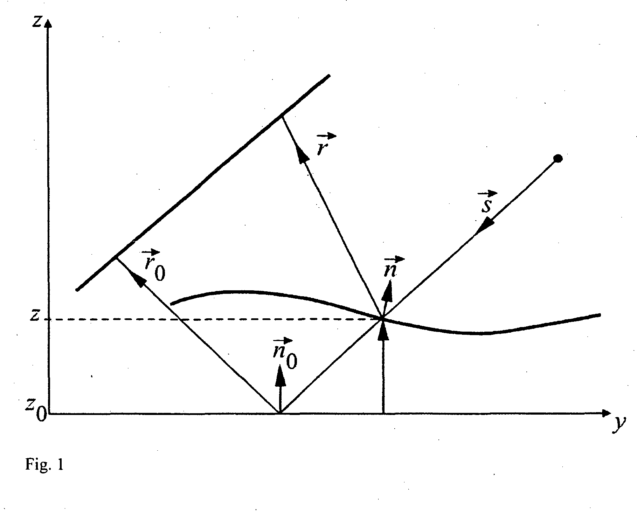

Dabei geht das erfindungsgemäße Oberflächeninspektionsverfahren von folgenden Überlegungen aus: Geht man von unterschiedlichen Lagen der spiegelnden Oberfläche aus (Fig. 1) so bedeutet dies für den Sichtstrahl s der Kamera, dass er in einem im Verhältnis zu einer festgelegten Nullebene außerhalb der Nullebene befindlichen Messobjekt einen anderen Punkt des Schirms sieht, als in der Nullebene. Auch wenn ebenfalls alle geometrischen Daten (die so genannte äußere Kalibrierung) und die Parameter von der Kamera bekannt sind, kann die örtliche Höhe z zunächst nicht direkt berechnet werden, weil hierfür die Richtung des reflektierten Strahls r fehlt. Die Mehrdeutigkeit entsteht, weil nur die Auftreffpunkte $s_i$ der reflektierten Sichtstrahlen $r_i$ auf der Schirmplatte identifiziert werden können. Erst wenn man die Schirmplatte um einen de,finierten Abstand nach vorn oder hinten verschieben würde, erhielte man einen zweiten Punkt s' und könnte somit die Richtung der Reflektionsstrahlen berechnen. Diese Erweiterung ist für den hier für die besonders bevorzugten Ausführungsformen relevanten Einsatz an bewegten Objekten jedoch nicht geeignet, so dass für die Anwendung des erfindungsgemäßen Oberflächeninspektionsverfahrens auf bewegte Oberflächen ein Verfahren angewendet wird, bei dem bereits aus einer einzigen Aufnahme der Verlauf einer Modellfläche für die betrachtete spiegelnde Oberfläche ermittelt werden kann.

Das erfindungsgemäße Oberflächeninspektionsverfahren lässt sich grob in zwei übergeordnete Abschnitte einteilen, nämlich die Aufbereitung der Aufnahme der Kamera zur Erzeugung einer Schnittpunkt-Tabelle, die die räumliche Lage der Schnittpunkte von Linienverläufen in der Aufnahme der Kamera in einem Koordinatensystem wiedergibt. In einem zweiten Schritt wird aus den Informationen über die Lage dieser Schnittpunkte mit Hilfe eines iterativen Verfahrens der Verlauf einer Modellfläche für die betrachtete spiegelnde Oberfläche ermittelt.

In einer bevorzugten Ausführungsform wird beispielsweise in der Bildverarbeitung ein Graubild einer entsprechenden Matrixkamera aufbereitet. Als Ergebnis können dann beispielsweise die Kreuzungspunkte der Aufnahme, die die Kamera von einem auf der Schirmplatte aufgebrachten Kreuzungsgitter gemacht hat, als Tabelle mit ihren Pixelkoordinaten und Gitterindizes vorliegen. In dieser bevorzugten Ausführungsform kann im zweiten Block aus den Pixelkoordinaten über eine Kameratransformations-Berechnung die Richtung der Sichtstrahlen berechnet werden. Da die Lage der Kreuzungspunkte auf der Schirmplatte bekannt ist und deren Zuordnung aus den Indizes aus der Bildverarbeitung möglich ist, kann aus diesen Geometriedaten eine Höhenmatrix berechnet werden. Es sind aber auch andere Vorgehensweisen denkbar.

In einer bevorzugten Ausführungsform wird die Modellfläche durch ein zweidimensionales Chebyshevpolynorn repräsentiert. Es hat sich gezeigt, dass eine solche Flächen-Darstellung den Rechenaufwand erheblich reduziert_

Bei einem 4berflächeninspektionsverfahrens kann eine Kamera eine Aufnahme eines auf einem Schirm abgebildeten Musters machen, das so ausgestaltet ist, dass es zumindest Schnittpunkte von Linien darstellt. Die Sichtrichtung der Kamera ist auf einen Bereich der spiegelnden Oberfläche gerichtet. Die Oberfläche des Schirms, auf der das Muster abgebildet ist, ist so angeordnet und diesem Bereich so zugewandt ist, dass der Strahlengang der Sichtstrahlen der Kamera von der Kamera über die spiegelnde Oberfläche bis zur Oberfläche des Schirms führt. Die Kamera ist auf die Oberfläche des Schirms fokussiert. Die Aufnahme wird durch ein Analyseverfahren analysiert und eine Schnittpunkt-Tabelle erzeugt, die die räumliche Lage von Schnittpunkten der Linienverläufe in einem Koordinatensystem wiedergibt. Mit Hilfe eines iterativen Verfahrens wird aus der Schnittpunkt-Tabelle der Verlauf einer Modellfläche für die betrachtete spiegelnde Oberfläche ermittelt wird, wobei die Modellfläche durch ein zweidimensionales Chebyshevpolynom repräsentiert wird.

Um die Vorteile der Darstellung der Modellfläche für ein zweidimensionales Chebyshevpolynom zu erreichen, ist es nicht zwingend notwendig, im Rahmen der Bildverarbeitung das zuvor geschriebene Skelettierverfahren einzusetzen. Die Vorteile dieses Aspekts eines Oberflächeninspektionsverfahrens können auch mit anderen Analyseverfahren erzielt werden, die aus der Aufnahme eine Schnittpunkt-Tabelle erzeugen können, die die räumliche Lage von Schnittpunkten der Linienverläufe in einem Koordinatensystem wiedergeben können.

Bei der automatischen Inspektion spiegelnder Oberflächen wird erfindungsgemäß das Erkennen des Auftretens von Oberflächendefekten (Detektion) als auch die Erfassung der Oberflächentopographie bzw. der Oberflächengradienten (Vermessen) ermöglicht. Diese können aus der Modellfläche abgeleitet werden.

In einer bevorzugten Ausführungsform wird der jeweilige Schnittpunkt in der Schnittpunkt-Tabelle mit einem ihn definierenden Indexwert und seiner x- und y-Koordinate in einem Koordinatensystem abgelegt. Dies erlaubt es, die einzelnen Schnittpunkte zu identifizieren und im Rahmen des iterativen Verfahrens jeweiligen Schnittpunkten in dem Muster auf der Schirmplatte zuzuordnen.

In einer bevorzugten Ausführungsform ist das Muster fest auf dem Schirm aufgebracht, beispielsweise auf den Schirm aufgedruckt. Es kann eine Lichtquelle vorgesehen sein, die den Schirm anstrahlt.

In einer alternativen Ausführungsform kann das Muster durch einen Projektor, beispielsweise einen Projektor mit einem Diavorschub, auf den Schirm projiziert werden.

Vorzugsweise ist der Schirm opak. Alternativ kann der Schirm durch ein hinterleuchtetes LCD-Display oder einen Plasmaschirm gebildet werden.

In einer bevorzugten Ausführungsform ist das Muster ein homogenes Raster, beispielsweise ein Kreuzgitter. Die Ausbildung des Musters als Raster vereinfacht die Auswertung der Aufnahme der Kamera. Als Muster können jedoch auch andere, nicht rasterartige Muster verwendet werden, beispielsweise Schachbrettmuster, farbcodierte Muster, Dotcode.

Nach einer bevorzugten Ausführungsform weist das Muster ein homogenes Raster und mindestens eine von dem homogenen Raster abweichende Markierung auf. Bei dem erfindungsgemäßen Oberflächeninspektionsverfahren ist es von Vorteil, wenn einzelne Elemente des Rasters mit einem durchlaufenden Index identifiziert werden können. Das Vorsehen einer von dem homogenen Raster abweichenden Markierung erlaubt es besonders leicht, den Startpunkt dieser Indizierung festzulegen und auch in der Aufnahme der Kamera wiederzufinden, selbst wenn das Muster durch die spiegelnde Oberfläche abweichend gespiegelt wird.

In einer besonders bevorzugten Ausführungsform ist lediglich eine von dem homogenen Raster abweichende Markierung vorgesehen. Dies reicht aus, um bei einer bevorzugten Ausführungsform des erfindungsgemäßen Oberflächeninspektionsverfahrens die dort vorgeschlagene Indizierung durchzuführen.

In einer bevorzugten Ausführungsform weist das Muster ein Kreuzgitter auf, bei dem die Gitterzwischenräume nicht rechteckig sondern rund ausgebildet sind. Es hat sich gezeigt, dass ein derartiges Kreuzgitter besonders gut analysiert werden kann.

Nach einer bevorzugten Ausführungsform wird die Binarisierung dynamisch durchgeführt. Bei einem realen Kamerabild ist in der Regel eine gleichmäßige Ausleuchtung nicht vorhanden. Deshalb werden die Schwellenwerte zwischen dem Übergang von weiß auf schwarz nicht gleichmäßig sein. Die dynamische Binarisierung wird vorzugsweise regionsorientiert durchgeführt. Die Pixel können im Verhältnis 1:1 (weiß:schwarz) getriggert werden.

Das erfindungsgemäße Oberflächeninspektionsverfahren findet insbesondere in Anlagen zur Metallbandveredelung Einsatz, können aber beispielsweise auch bei der Inspektion Edelstahl, Aluminium, Kupfer, Glasscheiben und - spiegel und lackierten Oberflächen eingesetzt werden.

Nachfolgend wird die Erfindung anhand einer lediglich Ausführungsbeispiele darstellenden Zeichnung näher erläutert. Darin zeigen:

Fig. 1    Die Darstellung des von der Kamera gesehenen Bereichs des sich im Messobjekt spiegelnden Schirms in Abhängigkeit von der Höhe und Gradient des Messobjekts;

Fig. 2    einen Teil der Vorrichtung in einer schematischen, perspektivischen Darstellung;

Fig. 3    ein Muster;

Fig. 4    das Raster für die Schirmplatte;

Fig. 5    die Aufnahme der Kamera für die so genannte Nullebene;

Fig. 6    die Aufnahme der Kamera für ein Testblech;

Fig. 7    den Ablaufplan einer zweidimensionalen Bildverarbeitung;

Fig. 8    das in die Objektebene transformierte Kamerabild des Testblechs nach Fig. 6;

Fig. 9a, b    ein Ausschnitt aus dem in die Objektebene transformierten Bilds nach Fig. 8 (Fig. 9a) und den gleichen Ausschnitt nach der Binarisierung (Fig. 9b);

Fig. 10    die Darstellung der Fig. 8 nach einer Binarisierung und einer Skelettierung;

Fig. 11a, b    die Darstellung der Fig. 10 nach einer Extraktion in die horizontalen (Fig. 11a) und vertikalen Linien (Fig. 11 b);

Fig. 12    die Simulationsschritte für eine Messstelle;

Fig. 13    die numerische Berechnung der Modellparameter;

Fig. 14    die Geometrie des Rasterreflexionsverfahrens und

Fig. 15    die Modellanpassung beim Rasterreflexionsverfahen.

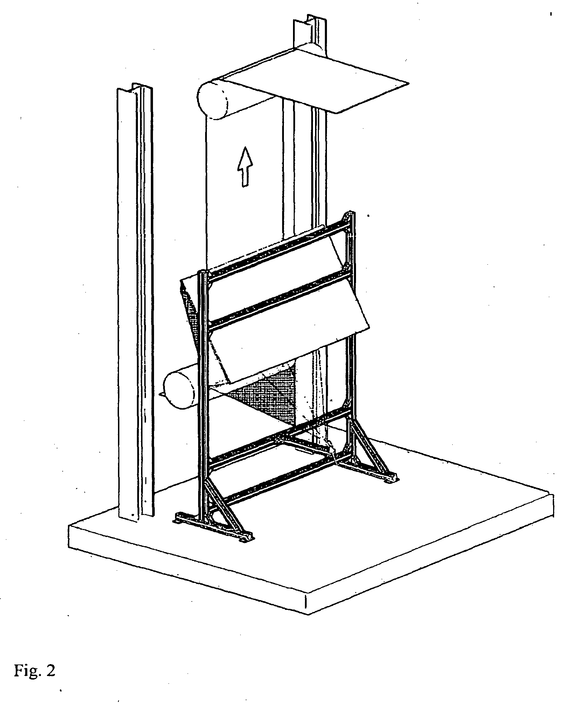

In der in der Fig. 2 dargestellten Konfiguration steht der Messbereich senkrecht. Die Kamera und die Schirmplatte werden von einer Aluminiumkonstruktion getragen. Die Kamera blickt unter einem flachen Winkel auf den Messbereich. Die Schirmplatte wurde aus zwei Gründen möglichst dicht über dem Messbereich angeordnet:

1. Um die Dimension der Schirmplatte möglichst klein zu halten. Im konkreten Fall handelt es sich um einen Messbereich von 1,5 m x 1,3 m und hier wird idealerweise mit einer Schirmplatte von 2,8 m x 1,5 m gearbeitet.

2. Um die Empfindlichkeit möglichst gering zu halten, den Messbereich also entsprechend groß zu halten.

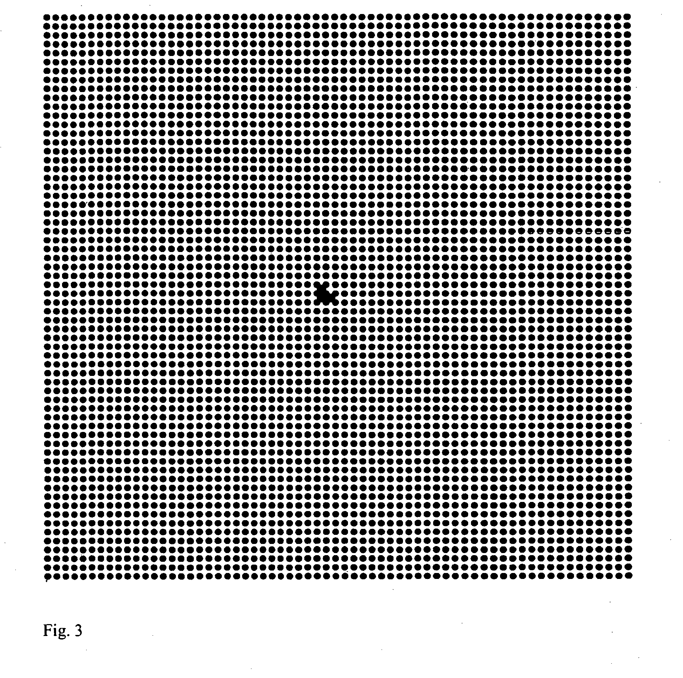

Ein mögliches Muster für die erfindungsgemäße Vorrichtung ist in Fig. 3 dargestellt. Es wird ein Kreuzgitter als Binarbild mit einem Gitterabstand (Maschenabstand) von 50 mm x 50 mm verwendet. Der Messbereich ist beispielsweise 1,6 m x 1,6 m groß. Das auf die Schirmplatte zu druckende Bild wird über eine Schirmtransformation berechnet.

Um den Schirm komplett auszunutzen, wurde das Kreuzgitter der Objektebene auf 3,2 m x 3,2 m ausgeweitet. Eine Markierung wurde eingesetzt. Diese dient dem Einstieg für den Indexzähler bei der Detektionsroutine.

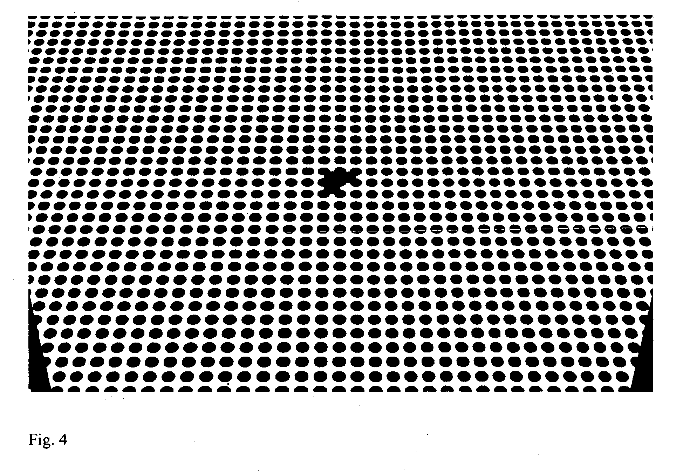

In Fig. 4 ist das auf die Schirmplatte zu druckende Raster dargestellt.

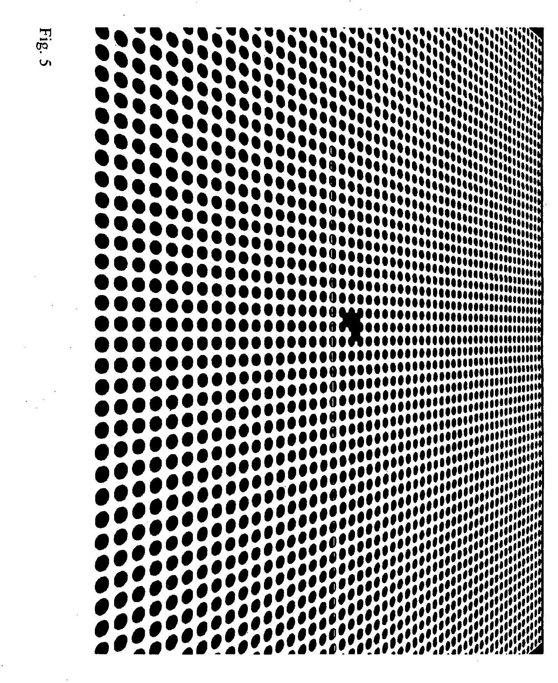

Fig. 5 zeigt die Aufnahme der Kamera, wenn die spiegelnde Oberfläche vollkommen plan und ohne jeglichen Oberflächendefekt in der Nullebene liegt.

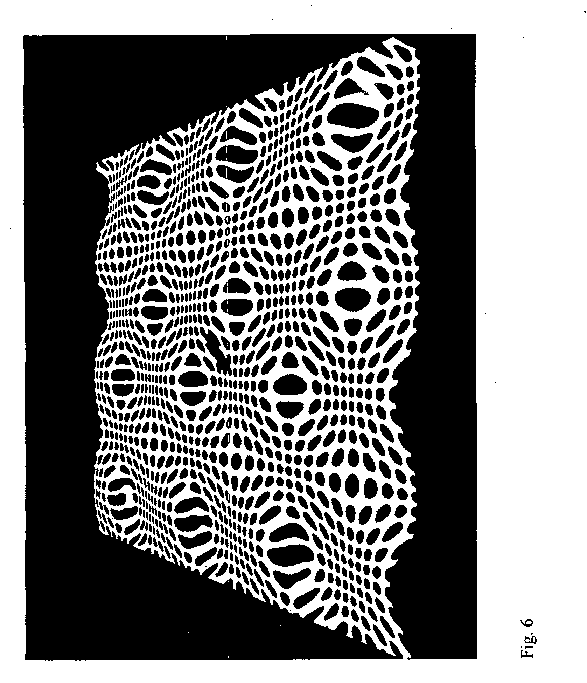

Fig. 6 zeigt die Aufnahme der Kamera bei einem welligen Blech.

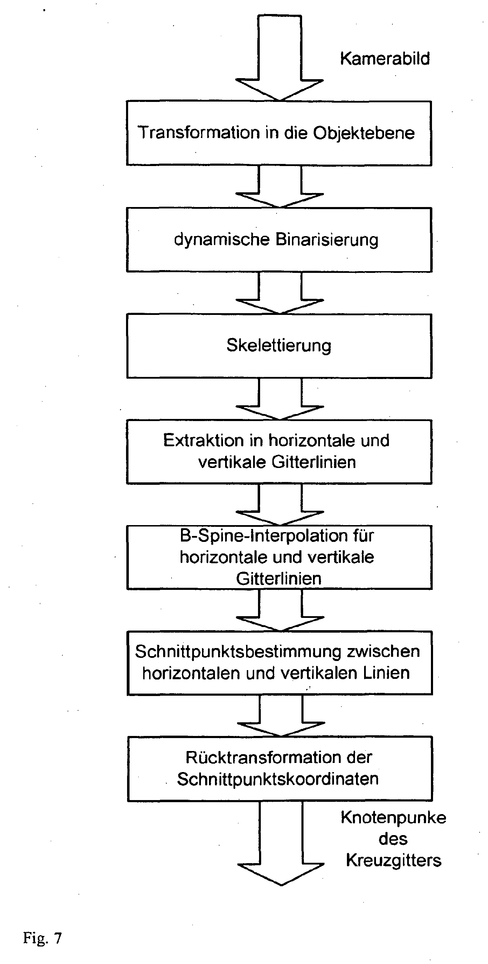

Fig. 7 zeigt den Ablaufplan einer zweidimensionalen Bildverarbeitung. Um einige Funktionen zu vereinfachen, wird das Bild zunächst in die Objektebene transformiert. Anschließend erfolgt eine Binarisierung mit dynamischer Schwelle. Alle Strukturen in diesem Bild werden nun auf die Stärke eines Pixels ausgedünnt: Skelettierung. Bedingt durch große lokale Verzerrungen des Kreuzgitters ist sehr aufwendig, die Kreuzungspunkte unmittelbar zu detektieren. Deshalb werden bevorzugt in einem nächsten Schritt horizontale und vertikale Linien separiert. Die einzelnen Linien werden nun einer B-Spline-Interpolation zugeführt. So können im Anschluss die Schnittpunkte aller horizontalen Linien mit allen vertikalen Linien berechnet werden. Über die Null-Markierung werden die Schnittpunktskoordinaten richtig indiziert. Diese Koordinaten liegen noch in der Objektebene, deshalb folgt nun die Rücktransformation in die Bildebene der Kamera. Es werden zwei Matrizen mit Schnittpunktskoordinaten für x und y ausgegeben.

Im Einzelnen werden die folgenden Operationen durchgeführt:

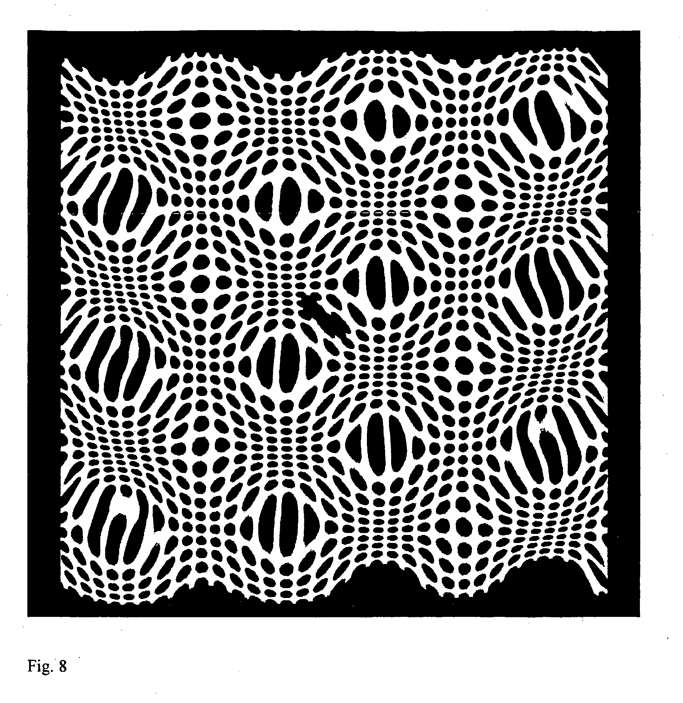

Über die Transformationsparameter der realen Messstelle wird das Kamerabild in die Objektebene umgerechnet (Fig. 8). Jetzt liegt ein rechteckiger Bereich vor, was die folgenden Schritte der Bildverarbeitung erheblich vereinfacht. Die Transformationsparameter werden der inneren und äußeren Kamerakalibrierung entnommen. Die innere Kalibrierung umfaßt: Verzeichnungsparameter des Kameraobjektivs, Chipdaten, Brennweite.

Die äußere Kalibrierung umfaßt Rotationsmatrix und Translationsvektor um zwischen den Koordinatensystemen von Kamera und Messbereich umrechnen zu können

Aus dem Graubild, welches in der Regel eine Tiefe von 8 bis 12 Bit beinhaltet, wird ein Binarbild erzeugt. Es gibt nur noch zwei Werte: 0 = kein Gitter und 1 = Gitter. Die Schwelle arbeitet dynamisch, da bei einem realen Kamerabild eine gleichmäßige Ausleuchtung nicht vorhanden ist.

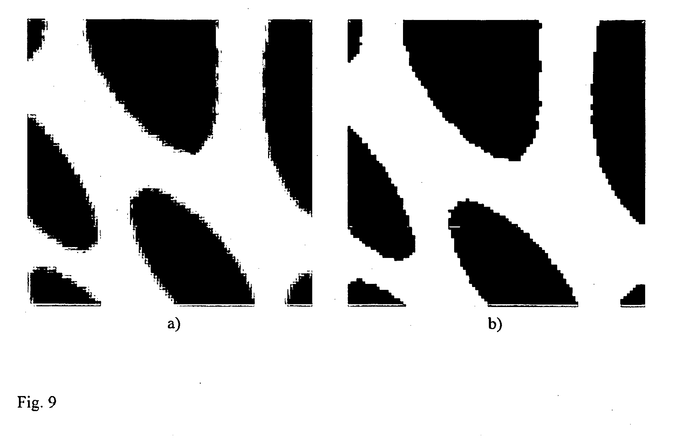

Fig. 9a zeigt einen Ausschnitt aus den in die Objektebene transformierten Bild gemäß Fig. 8.

Fig. 9b zeigt den binarisierten Ausschnitt.

Es gibt eine Reihe unterschiedlicher Skelettierverfahren. Für einen konkreten Anwendungsfall sind die Vor- und Nachteile der jeweiligen Algorithmen abzuwägen. Einige Verfahren führen zu Unterbrechungen im Skelett (z. B. Mittelachsentransformation). Hier werden dann oft Aufbereitungsroutinen zum Auffüllen dieser Lücken nachgeschaltet. Andere Skelettieralgorithmen lassen Linienenden nicht stehen, sondern kürzen diese mit jedem Schritt um einen Pixel. Verfahren, die dies wiederum vermeiden, neigen zum Stehenlassen so genannter Bärte. In diesem Fall werden Entbartungsroutinen nachgeschaltet, die wiederum nicht zwischen Linienende und Bart unterscheiden können. Für diesen konkreten Anwendungsfall der Skelettierung eines Kreuzgitters wurden vorhandene Algorithmen so modifiziert, dass nun folgende drei Anforderungen weitestgehend erfüllt werden können:

- Keine Unterbrechungen zulassen
- Keine Linienenden kürzen
- Keine Bärte stehen lassen

Bei den N8 - Nachbarschafsbeziehungen werden die Bildpunkte in folgende Klassen gruppiert: "Isolierter Punkt", "Linienanfang", "Linienelement", "Knoten", "innerer Punkt" und "unwesentlicher Punkt". Vorraussetzung für diese Einteilung ist, das nur geschlossene Linienzüge nach der Binarisierung vorliegen (H. Kazmierczak, Erfassung und maschinelle Verarbeitung von Bilddaten, Akademie-Verlag-Berlin, 1980).

Eine Vereinfachung erfolgt durch die Form des Kreuzgitters. Es sind im Bereich größerer Krümmungen konkave Strukturen vorgesehen. Deshalb handelt es sich nicht um schwarze Vierecke, sondern um schwarze Kreise auf weißem Untergrund.

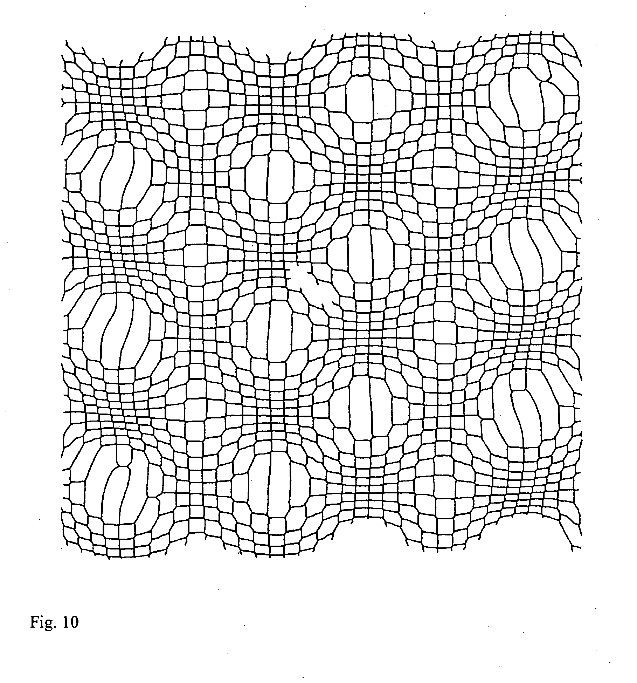

Die Fig. 10 zeigt das Ergebnis der Skelettierung, wobei das Bild aus drucktechnischen Gründen negiert dargestellt ist.

Eine Skelettierung kann relativ rechenzeitaufwendig sein. Das Binarbild wird sukzessive von Schwarz nach Weiß abgeräumt (so genanntes Opening). In jedem Bearbeitungsschritt sind für jeden Pixel Nachbarschafts-Beziehungen zu anderen Pixeln zu prüfen.

Im Bereich der Kreuzungspunkte des Skelettbildes kommt es zu Verzerrungen. Kreuzungen werden durch Deformation in jeweils zwei Gabeln auseinander gezogen. Um die Lage der Kreuzungen korrekt zu bestimmten, empfiehlt es sich, alle im Skelettbild besetzten Pixel zu berücksichtigen. Hier ist eine B-Spline-Interpolation der horizontalen und vertikalen Linien vorteilhaft. Ebenso könnte eine Tiefpassfilterung eingesetzt werden. Um diesen Schritt durchführen zu können, wird eine Separation der vertikalen und horizontalen Linien durchgeführt.

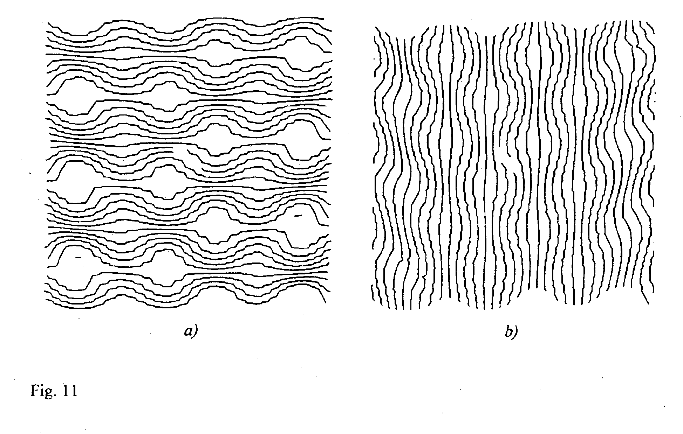

Fig. 11a zeigt die horizontalen Gitteranteile des Skelettbildes und Fig. 11b die vertikalen Gitteranteile. Verfolgt man in Fig. 10 beispielsweise eine horizontale Linie, so stellt man fest, dass diese abschnittsweise mehr vertikal als horizontal verläuft und dass in diesem Bereich eine Überschneidung zu den vertikalen Linien auftritt. Es entstehen demnach zwei Gabeln, wenn eine Kreuzung deformiert wird. Die Verbindung beider Gabeln enthält gleichermaßen eine horizontale und eine vertikale Linie. Diese Kenntnis der Struktur des deformierten Kreuzgitters wird im Algorithmus zur Separation vertikaler und horizontaler Linien berücksichtigt.

Die in dem auf der Schirmplatte wiedergegebenen Muster vorgesehene Markierung führt in der Aufnahme nach der Bildbearbeitung zu zwei übereinanderliegenden Unterbrechungen im Skelettbild der horizontalen Gitteranteile und zwei nebeneinanderliegenden Unterbrechungen im Skelettbild der vertikalen Gitteranteile. Alle vier Unterbrechungen liegen dicht beieinander, so dass Fehldetektionen, bedingt durch lokale Störungen, quasi ausgeschlossen werden können. Eine eindeutige Indizierung aller Linien ist sichergestellt.

Es werden die Schnittpunkte der horizontalen und vertikalen Linien ausgelesen und über einen Gitterzähler indiziert. Ausgehend von den vier zuvor beschriebenen Unterbrechungen werden alle Schnittpunkte in waagerechter und senkrechter Richtung abgezählt. Dabei werden ausgehend von den Zählerständen ie/2 und je/2 die Zähler i und j in Richtung des rechten und unteren Bildrandes inkrementiert und in Richtung des linken und oberen Bildrandes decrementiert.

Werden die Pixel aus der Umgebung mit einbezogen, ist eine subpixelgenaue Bestimmung möglich. Im einfachsten Fall können für die Koordinaten des Schnittpunkts genau die Koordinaten des Pixels übernommen werden, welcher Bestandteil horizontaler und vertikaler Linie, also Kreuzungsmittelpunkt ist. Genauer wird die Koordinatenbestimmung, wenn weitere Pixel rechts und links, oben und unten mit in die Koordinatenbestimmung in Form einer Schwerpunktsberechnung einbezogen werden.

In einem letzten Schritt werden die Koordinaten der Schnittpunkte zurück in die Perspektive der Kamera transformiert und an die geometrische Berechnung übergeben.

Den Sichtstrahlen der Kamera werden über die 2D-Bildverarbeitung die Schnittpunktskoordinaten des reflektierten Strahls mit der Schirmplatte zugeordnet. Hieraus kann für einen einzelnen Sichtstrahl noch keine örtliche Höhe berechnet werden. Wie im Zusammenhang mit der Fig. 1 bereits beschrieben, kann bei gegebener Konfiguration aus einem einzigen Sichtstrahl der Kamera, welchem über die 2D-Bildverarbeitung die Schnittpunktskoordinaten des reflektierten Strahls mit der Schirmplatte zugeordnet sind, noch keine örtliche Höhe berechnet werden.

Erfindungsgemäß wird ein iteratives Verfahren angewandt. Bei dem hier beschriebenen Ausführungsbeispiel wird ein ganzes Bündel von Sichtstrahlen betrachtet und vorausgesetzt, dass keine Sprünge auf dem Messobjekt existieren. Bei ausreichender Auflösung gilt dann, dass die örtlichen Gradienten mit den örtlichen Höhen an der Stelle der Auftreffpunkte der Sichtstrahlen auf dem Messobjekt gekoppelt sind. Vorzugsweise wird mit dem iterativen Verfahren der Verlauf einer Modellfläche, beispielsweise in Form eines mathematischen Modells, ermittelt. In dem hier beschriebenen Ausführungsbeispiel wird die Modellfläche durch eine Koeffizientenmatrix beschrieben. Es werden die Koeffizienten der Modellfläche über die Schnittpunktskoordinaten der reflektierten Sichtstrahlen mit der Schirmplatte berechnet. Dabei wird eine Koeffizientenmatrix für die Modellfläche vorgegeben und daraus die Schnittpunkte der reflektierten Strahlen mit der Schirmplatte berechnet. Von dieser Startkoeffizientenmatrix ausgehend werden die Schnittpunktskoordinaten der reflektierten Strahlen mit der Schirmplatte berechnet. Anschließend werden die berechneten Koordinaten mit den bekannten Gitterkoordinaten des Schirms verglichen. Die Koeffizienten der Modellfläche werden nun so eingestellt, dass sich die Differenz zwischen berechneten und bekannten Koordinaten möglichst verringert. Die Berechnung und der Vergleich werden so lange wiederholt, bis eine vorgegebene Schranke für die Differenz zwischen Gemessenen und Berechneten unterschritten wird. Als Lösungsmethode für dieses, zudem nicht lineare, Problem ist das Levenberg-Marquardt-Verfahren geeignet. Zur Berechnung der Schnittpunktskoordinaten der reflektierten Sichtstrahlen mit der Schirmplatte ist die Simulation der Geometrie der Messstelle auf dem Rechner erforderlich. Sämtliche Kalibrierdaten werden mitberücksichtigt.

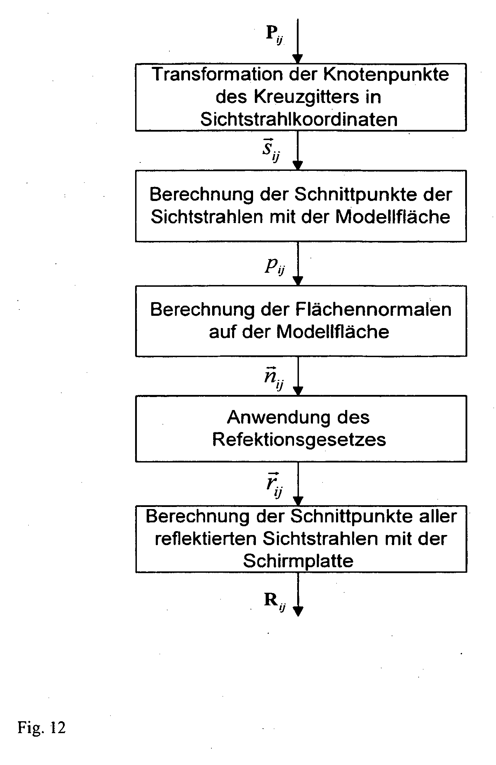

Die Fig. 12 zeigt den Ablauf der simulierten Messstelle. Aus den Pixelkoordinaten der detektierten Kreuzungspunkte des Gitters und den Parametern der Kameratransformation werden die Sichtstrahlvektoren berechnet. Es folgt die Berechnung der Schnittpunkte von Sichtstrahl und Modellfläche. An diesen Stellen werden nun die normalen Vektoren auf der Modellfläche berechnet. Aus den Einheitsvektoren der Sichtstrahlen und der Flachennormalen ergibt sich mit dem Reflektionsgesetz der Reflektionsvektor. Zuletzt wird der Schnittpunkt von Reflektionsvektor und Schirm berechnet.

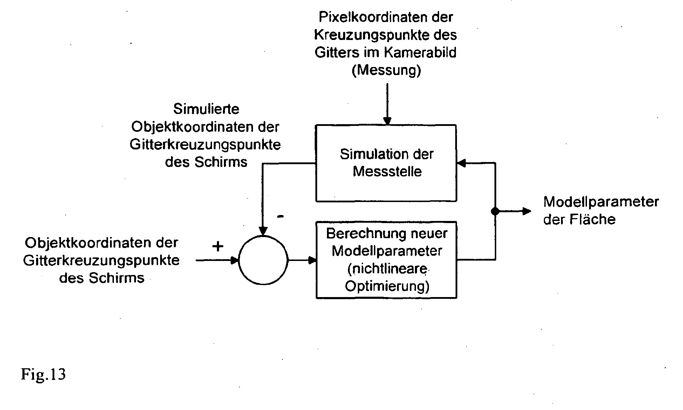

Fig. 13 zeigt den übergeordneten Signalflussplan. Deutlich ist die Regelkreisstruktur zu erkennen. Als Sollgröße werden hier die konstanten Objektkoordinaten der Gitterkreuzungspunkte betrachtet. Die Messstelle stellt die Regelstrecke dar und wird gemäß Fig. 12 simuliert. Die Regelabweichung stellt die Differenz zwischen den Objektkoordinaten der Gitterkreuzungspunkte des Schirms und den im Modell der Messstelle berechneten Koordinaten dar. Die nichtlineare Optimierung fungiert als Regler und liefert als Stellgröße die Modellparameter der Fläche. Die Pixelkoordinaten der Gitterkreuzungspunkte des Kamerabilds können als Stellgröße aufgefasst werden. Ist die Regelabweichung Null, dann stimmen Modellfläche und reale Fläche überein.

Es gibt Spielräume für die Anordnung in Fig. 13. Die hier gewählte Struktur resultiert in erste Linie aus dem Kreuzgitter. Die Kreuzungspunkte sind gleichzeitig die Stützstellen für die Berechnung der Modellparameter. Die Signale in Fig. 13 sind Vektoren und Matrizen mit erheblichen Dimensionen.

Um ein rand- oder mittenwelliges Blech mit Quer- oder Längsbogen sowie alle Mischformen ausreichend genau messen zu können, werden Parametermatrizen der Dimension 12 x 12 bis 20 x 20 vorgesehen.

Wird ein 1,5 m breites Blech über eine Länge von 1,5 m mit einem Stützstellenabstand von 50 mm gemessen, dann nehmen ca. 900 Gitterpunkte, welche je zwei Komponenten liefern, als Gleichungsvektor teil. Es handelt sich somit um ein überbestimmtes nichtlineares Gleichungssystem mit ca. 1800 Gleichungen und 144 bis 400 Unbekannten, das zu lösen ist. Hierzu ist der Regelkreis in Fig. 13 zwischen 500 bis 5000 mal zu durchlaufen. Das bedeutet, dass auch die Messstelle entsprechend oft durchzurechnen ist.

Die Berechnung der Schnittpunkte der Sichtstrahlen der Kamera mit der Modellfläche scheint zunächst ebenfalls numerisch möglich. Dies liegt jedoch an der Wahl des Koordinatensystems. Es ist eleganter, die Fläche zunächst im Koordinatensystem der Kamera zu beschreiben und nach Optimierung in den Objektraum zu transformieren. Die Fläche wurde zuvor mit Höhe als Funktion von Breite und Länge beschrieben, jetzt wird sie mit Sichtstrahllänge als Funktion der normierten Kamerachipkoodinaten ausgedrückt. Die numerische Berechnung des Schnittpunktes entfällt somit. Beschreibt man die 2D-Polynom-Fläche im Koordinatensystem des Objektraumes, dann ist es nicht möglich den Auftreffpunkt (math. Schnittpunkt) eines Sichtstrahls (math. Gerade) der Kamera analytisch zu berechnen. Wir die Fläche jedoch im Kamerakoordinatensystem beschrieben, dann stehen die Schnittpunkte sofort als Funktionswert zur Verfügung. Erst am Ende der nichtlinearen Optimierung erfolgt die Transformation der 2D-Polynom-Fläche vom Kamerakoordinatensystem in das Objektkoordinatensystem.

Die aufwendige Berechnung der Höhenmatrix über eine nichtlineare Optimierung erfordert erhebliche Rechenzeiten. Für ein zweidimensionales Chebyshevpolynom 18. Grades und ca. 2000 Komponentengleichungen werden auf einem drei Gigaherz-PC 10 bis 20 Minuten benötigt. Durch eine überlagerte Struktur, welche den Verlauf der Optimierung regelt und gegebenenfalls für geeignete Startwerte sorgt, kann erreicht werden, dass je Minute ein Ergebnis vorliegt. Weiterhin sind diverse programmtechnische Verbesserungen in den Routinen zur Modellberechnung möglich. Die Umsetzung in ein Betriebsmessgerät wird zu einer weiteren Rechenzeitverringerung führen, weil dann ein Austausch vieler Routinen mit prozessornahen Bibliotheken sowie eine Verteilung auf mehrere Rechner durchgeführt werden kann. Eine Möglichkeit zur äußeren Kalibrierung der Messstelle besteht darin, die räumliche Anordnung der Systemkomponenten mittels Photogrammetrie auszumessen.

Für den zweiten Schritt, nämlich für das Ermitteln des Verlaufs einer Modellfläche aus den Informationen über die Lage der Schnittpunkte mit Hilfe eines iterativen Verfahrens können auch folgende Grundüberlegungen eingesetzt werden:

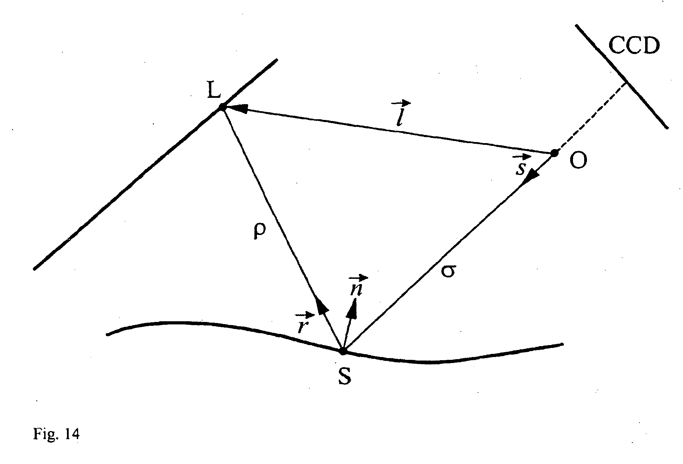

Nimmt man die Notation der Fig. 14, so läßt sich das Reflexionsgesetz in vektorieller Notation wie folgt niederschreiben:

$$r = s - 2nn^T s. \qquad (1)$$

Da für das Dreieck OSL

$$l = \rho r + \sigma s. \qquad (2)$$

gilt, folgt somit insgesamt

$$l - \rho(s - 2nn^T s) - \sigma s = 0. \qquad (3)$$

Durch eine entsprechende Kalibrierung der Anordnung der Kamera und des Schirms kann man erreichen, daß der Sichtrichtungsvektor s bekannt ist und dass jeder Punkt des Schirms, der durch den reflektierten Sichtstrahl getroffen wird, einwandfrei identifiziert werden kann und der zugehörige Ortsvektor I bekannt ist. Allerdings enthält die vektorielle Gleichung (3) Komponentengleichungen, so daß zum Lösen nach den Unbekannten p, σ und des Normalenvektor n (das sind insgesamt 4 Unbekannte) ein unbestimmtes Gleichungssystem vorliegt.

Fordert man für die Oberfläche gewisse Glattheitseigenschaften, so wird dieses Gleichungssystem jedoch eindeutig lösbar. Hierzu betrachtet man die Gesamtheit aller Sichtstrahlen $S_{ij}$ - ein jeder korrespondiert mit einem Pixel der Kamera mit den Indizes ij. Es ergibt sich somit folgendes Gleichungssystem:

$$l_{ij} - \rho_{ij}\left(s_{ij} - 2n_{ij}n_{ij}^T s_{ij}\right) - \sigma_{ij}s_{ij} = 0 \quad \forall i,j,$$
$$i \in \{0,\dots,I\}, \quad j \in \{0,\dots,J\}. \tag{4}$$

Die Unterbestimmtheit der vektoriellen Gleichung (3) folgt aus der isolierten Betrachtung eines einzigen Oberflächenpunktes. Betrachtet man hingegen die Oberfläche global, so sind die einzelnen Gleichungen in (4) bei ausreichender Glattheit der Oberfläche und ihres Gradienten stark genug miteinander gekoppelt, so dass das Gleichungssystem (4) eindeutig lösbar wird.

Dies kann beispielsweise durch Anpassung eines unendlich oft stetig differenzierbaren parametrischen Bezier-Modells an die real beobachteten Daten erfolgen. Implizit werden damit entsprechende Glattheitsannahmen für die Oberfläche getroffen.

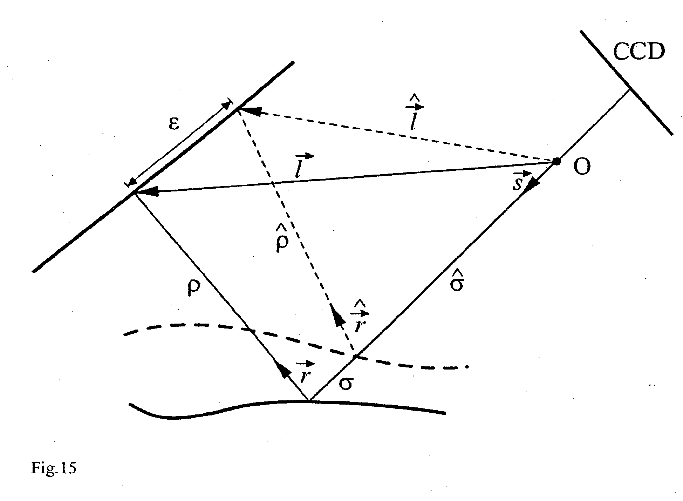

Wie auch vorstehend näher beschrieben wird bei diesem Verfahren die Modellfläche so lange angepaßt und verschoben, bis eine Modellfläche so ausgebildet und angeordnet ist, daß die simulierten, an der Modellfläche gespiegelten Beobachtungsstrahlen auf die gleichen LCD-Pixel treffen, die für die zu vermessende Oberfläche tatsächlich beobachtet wurden (Fig. 15).

Zur iterativen Anpassung des Modells an die Oberfläche kann man wie folgt vorgehen:

Zunächst beginnt man mit einem Modell niedriger Ordnung und verwendet nur eine Teilmenge der Sichtstrahlen. Für diese führt man eine inverse Strahlverfolgung durch. Jeder Strahl wird an der Modellfläche per Simulation reflektiert, und der sich ergebende Schnittpunkt $\hat{i}_{ij}$ mit der Schirm-Ebene wird berechnet.

Anschließend wird die Fehlerfunktion $\varepsilon_{ij} = \| l_{ij} - \hat{i}_{ij} \|$ minimiert und somit die Parameter des Modells an die real beobachteten $l_{ij}$ angepasst. Anschließend führt man wieder eine inverse Strahlverfolgung durch, bis die $\varepsilon_{ij}$ stagnieren.

Danach bietet es sich an, die Ordnung des Modells und die Zahl der berücksichtigten Sichtstrahlen zu erhöhen und den für das Teilmodell durchgeführten Prozeß so lange zu wiederholen, bis die $\varepsilon_{ij}$ hinreichend klein sind.

Als Oberflächenmodell $\sigma_{n v}$ kann eine Tensorprodukt-Bezier-Fläche verwendet.

$$\hat{\sigma}_{u v} = \sum_{k=0}^{n} \sum_{l=0}^{m} b_{k,l}^{m,n} B_k^n\left(\frac{u}{I}\right) B_l^m\left(\frac{v}{J}\right),$$
$$(u, v) \in [0, I] \times [0, J] \subset dR^2, \tag{5}$$

$$B_k^n(\alpha) = \binom{n}{k} \alpha^k (1 - \alpha)^{n-k}, \tag{6}$$

Darin sind die $b_{kl}$ die Parameter des Modells und die $B_k^n$ die Berstein-Polynome vom Grade n. Der Vorteil dieses Modells liegt darin, daß man bei einer Graderhöhung die neuen Koeffizienten aus den alten analytisch berechnen kann:

$$b_{k,l}^{m+1,n+1} = \frac{l}{n+1} b_{k,l-1}^{m+1,n} + \left(1 - \frac{l}{n+1}\right) b_{k,l}^{m+1,n},$$

$$b_{k,l}^{m+1,n} = \frac{k}{m+1} b_{k-1,l}^{m,n} + \left(1 - \frac{k}{m+1}\right) b_{k,l}^{m,n}. \quad (7)$$

Zur Bestimmung der $\hat{l}_{ij}$ setzt man das Modell gemäß Gl. (5) in Gl. (4) ein:

$$\hat{l}_{ij} = \hat{\rho}_{ij}\left(s_{ij} - 2\hat{n}_{ij}\hat{n}_{ij}^T s_{ij}\right) + \hat{\sigma}_{ij} s_{ij} \quad (8)$$

Zwar ist $\hat{\rho}_{ij}$ noch unbekannt. Da die $\hat{l}_{ij}$ jedoch auf der Schirm-Ebene (z' = 0) liegen müssen, kann man zu einer eindeutigen Lösung gelangen. Bei der Kalibrierung kann für das Bündel der Sichtstrahlen ein parametrischer Ansatz verwendet werden, mit dem sich die Sichtrichtungsvektoren $S_{uv}$ auch für nicht ganzzahlige Indizes u, v interpolieren lassen. Das erlaubt eine analytische Berechnung der Normalenvektoren der Modellfläche:

$$\hat{n}_{ij} \propto \frac{\partial(\hat{\sigma}_{uv} s_{uv})}{\partial u} \times \frac{\partial(\hat{\sigma}_{uv} s_{uv})}{\partial v}\bigg|_{\substack{u=i \\ v=j}}. \quad (9)$$

Wenn die $\varepsilon_{ij}$ hinreichend klein geworden sind, erhält man die Koeffizienten $b^*_{kl}$ für ein Modell der Ordnung m* + n*, das die wahre Oberfläche in Form der vektoriellen Funktion (u, v)→(x, y, z):

$$\sigma^*_{uv} s_{uv} = (x(u, v), y(u, v), z(u, v))^T \quad (10)$$

kontinuierlich approximiert.

**Patentansprüche**

1. Oberflächeninspektionsverfahren zum Detektieren von Oberflächendefekten und/oder Vermessen der Oberflächentopographie von spiegelnden stetigen Oberflächen, insbesondere spiegelnden Oberflächen von Metallbändern, insbesondere von bewegten Metallbändern, bei dem

   - eine Kamera eine Aufnahme eines auf einem Schirm abgebildeten Musters, das so ausgestaltet ist, dass es zumindest Schnittpunkte von Linien darstellt, macht, wobei
   - die Sichtrichtung der Kamera auf einen Bereich der spiegelnden Oberfläche gerichtet ist und
   - die Oberfläche des Schirms, auf der das Muster abgebildet ist, so angeordnet und diesem Bereich so zugewandt ist, dass der Strahlengang der Sichtstrahlen der Kamera von der Kamera über die spiegelnde Oberfläche bis zur Oberfläche des Schirms führt und
   - die Kamera auf die Oberfläche des Schirms fokussiert ist,
   - wobei die Aufnahme als Matrix A abgelegt wird, bei der der jeweilige Wert $a_{ij}$ dem Messwert entspricht, den die Kamera am Pixelort $i_{ij}$ aufgenommen hat, wobei der Maximalwert I des Index i der Anzahl der Pixelorte in eine erste Ausbreitungsrichtung der Aufnahmefläche der Kamera und der Maximalwert J des Index j der Anzahl der Pixelorte in eine weite Ausbreitungsrichtung entspricht,
   - die Matrix A durch eine Binarisierung in eine Matrix B überführt wird, bei der der jeweilige Wert $b_{ij}$ entweder den Wert 1 oder 0 hat,
   - das durch die Matrix B repräsentierte Binärbild einem Skelettierverfahren zugeführt wird, bei dem in einem Koordinatensystem, dessen beide Achsen den beiden Indexen der Matrix entsprechen, Linienverläufe ermittelt werden, entlang derer die Werte $b_{ij}$ gleich sind und danach eine Schnittpunkt-Tabelle erzeugt wird, die die räumliche Lage von Schnittpunkten der Linienverläufe in dem Koordinatensystem wiedergibt,
- mit Hilfe eines iterativen Verfahrens aus der aus der einen Aufnahme erzeugten Schnittpunkt-Tabelle der Verlauf einer Modellfläche für die betrachtete spiegelnde Oberfläche ermittelt wird.

**2.** Oberflächeninspektionsverfahren nach Anspruch 1, **dadurch gekennzeichnet, dass** die Modellfläche durch ein zweidimensionales Chebyshevpolynom repräsentiert wird.

**3.** Oberflächeninspektionsverfahren nach einem der Ansprüche 1 bis 2, **dadurch gekennzeichnet, dass** der jeweilige Schnittpunkte in der Schnittpunkt-Tabelle mit einem ihn definierenden Indexwert und seiner x- und y-Koordinate in einem Koordinatensystem abgelegt wird.

**4.** Oberflächeninspektionsverfahren nach einem der Ansprüche 1 bis 3, **dadurch gekennzeichnet, dass** das Muster fest auf den Schirm aufgebracht ist.

**5.** Oberflächeninspektionsverfahren nach einem der Ansprüche 1 bis 3, **dadurch gekennzeichnet, dass** das Muster durch einen Projektor auf den Schirm projiziert wird.

**6.** Oberflächeninspektionsverfahren nach einem der Ansprüche 1 bis 5, **dadurch gekennzeichnet, dass** das Muster ein homogenes Raster und mindestens eine von dem homogenen Raster abweichende Markierung aufweist.

**7.** Oberflächeninspektionsverfahren nach Anspruch 6, **dadurch gekennzeichnet, dass** das Muster ein homogenes Raster und eine einzige von dem homogenen Raster abweichende Markierung aufweist.

**8.** Oberflächeninspektionsverfahren nach einem der Ansprüche 1 bis 7, **dadurch gekennzeichnet, dass** das Muster ein Kreuzgitter aufweist, bei dem die Gitterzwischenräume nicht rechteckig sondern rund ausgebildet sind.

**9.** Oberflächeninspektionsverfahren nach einem der Ansprüche 1 bis 8, **dadurch gekennzeichnet, dass** die Binarisierung dynamisch durchgeführt wird.

**Claims**

**1.** Surface inspection method for detecting surface defects and/or measuring the surface topography of reflective continuous surfaces, in particular reflective surfaces of metal strips, especially of moving metal strips, in which

- a camera forms an image of a pattern formed on the screen that is configured so that it represents at least points of intersection of lines, wherein
- the sight direction of the camera is directed onto a region of the reflective surface and
- the surface of the screen on which an image of the pattern is formed is arranged and faces towards this region in such a way that the path of the light rays of the camera leads from the camera over the reflective surface to the surface of the screen, and
- the camera is focused on the surface of the screen,
- wherein the image is stored as matrix A, in which the respective value $a_{ij}$ corresponds to the measurement value that the camera has recorded at the pixel site $i_{ij}$, wherein the maximum value I of the index i corresponds to the number of pixel sites in a first propagation direction of the recording area of the camera and the maximum value J of the index j corresponds to the number of pixel sites in a broad propagation direction,
- the matrix A is converted by a binarisation into a matrix B, in which the respective value $b_{ij}$ either has the value 1 or 0,
- the binary image represented by the matrix B is passed to a framing process, in which in a coordinate system whose two axes correspond to the two indices of the matrix, line shapes are determined along which the values $b_{ij}$ are equal and thereafter a points of interception table is generated that reproduces the spatial position of points of intersection of the line shapes in the coordinate system,
- with the aid of an iterative method the shape of a model area for the observed reflective surface is determined from the intersection points table generated from an image.

**2.** Surface inspection method according to claim 1, **characterised in that** the model area is represented by a two-dimensional Chebyshev polynomial.

3. Surface inspection method according to one of claims 1 to 2, **characterised in that** the respective points of intersection are stored in the points of intersection table with an index value defining them and their x and y coordinates in a coordinate system.

4. Surface inspection method according to one of claims 1 to 3, **characterised in that** the pattern is firmly applied on the screen.

5. Surface inspection method according to one of claims 1 to 3, **characterised in that** the pattern is projected through a projector onto the screen.

6. Surface inspection method according to one of claims 1 to 5, **characterised in that** the pattern has a homogenous grid and at least one marking different from the homogenous grid.

7. Surface inspection method according to claim 6, **characterised in that** the pattern has a homogeneous grid and a single marking different from the homogeneous grid.

8. Surface inspection method according to one of claims 1 to 7, **characterised in that** the pattern has a lattice shape in which the lattice interstices are not rectangular but are round.

9. Surface inspection method according to one of claims 1 to 8, **characterised in that** the binarisation is carried out dynamically.


**Revendications**

1. Procédé d'inspection de surfaces, conçu pour détecter des défauts de surfaces et/ou pour mesurer la topographie de surfaces stables réfléchissantes, notamment de surfaces réfléchissantes de bandes métalliques, en particulier de bandes métalliques mises en mouvement, dans lequel

   - une caméra effectue un enregistrement d'un motif reproduit sur un écran et configuré de façon telle qu'il représente au moins des points d'intersection de lignes,
   - la direction d'observation de ladite caméra pointe vers une région de la surface réfléchissante,
   - la surface de l'écran sur laquelle le motif est reproduit est disposée, et tournée vers cette région, de telle sorte que la trajectoire des rayons d'observation de la caméra s'étende de ladite caméra jusqu'à ladite surface de l'écran, en transitant par la surface réfléchissante, et
   - ladite caméra est focalisée sur ladite surface de l'écran,
   - sachant que l'enregistrement est consigné en tant que matrice A dans laquelle la valeur respective $a_{ij}$ correspond à la valeur mesurée que la caméra a enregistrée sur le site de pixellisation $i_{ij}$, la valeur maximale 1 de l'indice i correspondant au nombre des sites de pixellisation dans une première direction de propagation de la surface d'enregistrement de la caméra, et la valeur maximale J de l'indice j correspondant au nombre des sites de pixellisation dans une seconde direction de propagation,
   - ladite matrice A étant transformée, par binarisation, en une matrice B dans laquelle la valeur respective $b_{ij}$ présente la valeur 1 ou 0,
   - l'image binaire, représentée par ladite matrice B, étant vouée à un procédé de squelettisation au cours duquel des tracés de lignes, le long desquels les valeurs $b_{ij}$ sont identiques, sont déterminés dans un système de coordonnées dont les deux axes correspondent aux deux indices de ladite matrice, après quoi il est engendré un tableau de points d'intersection qui restitue la position spatiale occupée par des points d'intersection desdits tracés de lignes dans ledit système de coordonnées,
   - le profil d'une surface de modèle, se rapportant à la surface réfléchissante considérée, étant déterminé à l'aide d'un procédé itératif, sur la base dudit tableau de points d'intersection engendré à partir de l'enregistrement unique.

2. Procédé d'inspection de surfaces, selon la revendication 1, **caractérisé par le fait que** la surface de modèle est représentée par un polynôme de Tchebychev bidimensionnel.

3. Procédé d'inspection de surfaces, selon l'une des revendications 1 à 2, **caractérisé par le fait que** le point respectif d'intersection est consigné, dans le tableau de points d'intersection, avec une valeur d'indexage le définissant et avec ses coordonnées x et y dans un système de coordonnées.

**4.** Procédé d'inspection de surfaces, selon l'une des revendications 1 à 3, **caractérisé par le fait que** le motif est porté de manière fixe sur l'écran.

**5.** Procédé d'inspection de surfaces, selon l'une des revendications 1 à 3, **caractérisé par le fait que** le motif est projeté sur l'écran par l'intermédiaire d'un projecteur.

**6.** Procédé d'inspection de surfaces, selon l'une des revendications 1 à 5, **caractérisé par le fait que** le motif comporte un réseau tramé homogène, et au moins un repère différant dudit réseau tramé homogène.

**7.** Procédé d'inspection de surfaces, selon la revendication 6, **caractérisé par le fait que** le motif comporte un réseau tramé homogène, et un unique repère différant dudit réseau tramé homogène.

**8.** Procédé d'inspection de surfaces, selon l'une des revendications 1 à 7, **caractérisé par le fait que** le motif présente un réseau entrecroisé dans lequel les intervalles d'entrecroisement sont de configuration non pas rectangulaire, mais circulaire.

**9.** Procédé d'inspection de surfaces, selon l'une des revendications 1 à 8, **caractérisé par le fait que** la binarisation est exécutée en mode dynamique.

Fig. 1

Fig. 2

Fig. 3

Fig. 4

Fig. 5

Fig. 6

Kamerabild

Transformation in die Objektebene

dynamische Binarisierung

Skelettierung

Extraktion in horizontale und
vertikale Gitterlinien

B-Spine-Interpolation für
horizontale und vertikale
Gitterlinien

Schnittpunktsbestimmung zwischen
horizontalen und vertikalen Linien

Rücktransformation der
Schnittpunktskoordinaten

Knotenpunke
des
Kreuzgitters

Fig. 7

Fig. 8

a)

b)

Fig. 9

Fig. 10

a)                                  b)

Fig. 11

$\mathbf{P}_{ij}$

Transformation der Knotenpunkte des Kreuzgitters in Sichtstrahlkoordinaten

$\vec{s}_{ij}$

Berechnung der Schnittpunkte der Sichtstrahlen mit der Modellfläche

$p_{ij}$

Berechnung der Flächennormalen auf der Modellfläche

$\vec{n}_{ij}$

Anwendung des Refektionsgesetzes

$\vec{r}_{ij}$

Berechnung der Schnittpunkte aller reflektierten Sichtstrahlen mit der Schirmplatte

$\mathbf{R}_{ij}$

Fig. 12

Pixelkoordinaten der
Kreuzungspunkte des
Gitters im Kamerabild
(Messung)

Simulierte
Objektkoordinaten der
Gitterkreuzungspunkte
des Schirms

Simulation der
Messstelle

Modellparameter
der Fläche

Objektkoordinaten der
Gitterkreuzungspunkte
des Schirms

Berechnung neuer
Modellparameter
(nichtlineare
Optimierung)

Fig.13

Fig. 14

Fig.15

**IN DER BESCHREIBUNG AUFGEFÜHRTE DOKUMENTE**

**In der Beschreibung aufgeführte Patentdokumente**

- DE 19643018 A1

**In der Beschreibung aufgeführte Nicht-Patentliteratur**

- **H. KAZMIERCZAK.** Erfassung und maschinelle Verarbeitung von Bilddaten. Akademie-Verlag, 1980